# EUROPEAN PATENT APPLICATION

(11) **EP 1 174 814 A1**
(43) Date of publication of application: **23.01.2002**
(21) Application number: 01306144.5
(22) Date of filing: 17.07.2001
(51) Int. Cl.: G06F 17/60

(54) **Apparatus, system and method to provide market impressions for a centralized software evaluation portal**

(30) Priority: 19.07.2000 US 619627
(71) Applicant: International Business Machines Corporation, Armonk, NY 10504 (US)
(72) Inventor: Boies, Stephen J., c/o United Kingdom Ltd., Winchester, Hampshire SO21 2JN (GB); Dinkin, Samuel, c/o IBM United Kingdom Ltd., Winchester, Hampshire SO21 2JN (GB); Moskowitz, Paul, c/o IBM United Kingdom Ltd., Winchester, Hampshire SO21 2JN (GB); Yu, Philip S., c/o IBM United Kingdom Ltd., Winchester, Hampshire SO21 2JN (GB)
(74) Representative: Burt, Roger James, Dr.

(57) **Abstract**

A system, method, computer program, computer program article of manufacture, and business method is disclosed for storing a plurality of software products from a plurality of vendors on a central location in a computer network. The method is performed by first associating a client interface in the central location. Next, the client interface receives client access and profile data, where that data is accessible to at least one vendor database. After the client downloads the software, the software is activated when a connection is established between client and the central location. At least one algorithm to track usage of software by the client is further activated while the client is connected to the central location, so that at least one of the plurality of vendors may correlate a market impression from (1) the client profile data, and (2) the software.

## Description

### FIELD OF THE INVENTION

The present invention relates to a system and method for providing software vendors market impressions on trial software, placed for availability to clients in an IP-accessible location.

### BACKGROUND OF THE INVENTION

The proliferation and expansion of computer systems, networks, databases, the Internet, and particularly the World Wide Web (WWW), has resulted in a vast and diverse collection of information and means of communication. More importantly, the medium of the WWW allows vendors, manufacturers, promoters, advertisers, etc. to effectively market and "market test" products on the WWW community. It is well-known that the WWW / Internet medium is becoming one of the most important media through which products and services are currently promoted and sold. With regard to software products, the WWW has been especially important in getting products quickly and efficiently to client consumers that wish to purchase them. While client consumers were previously limited to purchasing software through portable storage mediums (that is, CD-ROM's, diskettes, etc.), the WWW now allows clients to directly download software onto their computers.

It is well-known that vendors and manufacturers make products and/or services available by posting advertisements or promotions on the WWW, or by setting up servers so that clients may download specific software from a vendor or from multiple vendors. However, the nature of these systems does not allow a vendor or manufacturer to obtain a "market impression" of client usage of the software. Furthermore, the current methodologies limit the exposure that vendor software could get with potential customers, because there is no unifying processing space through which clients may try software products before purchasing.

It is generally known that client consumers are more apt to purchase software that is familiar to them. Clients gain this familiarity not only through use of one particular software product, but also through comparison to other similar products as well. Until now, such familiarization involved considerable amounts of time and effort. Likewise, software developers need some kind of feedback from clients to determine what aspects of their software is popular and what aspects are not. To date, such determinations typically involved manual interaction with clients. This obviously places a greater burden on software developers and clients alike.

### SUMMARY OF THE INVENTION

To address the above-discussed deficiencies in existing systems, the present involves the use of a central portal through which software developers and/or providers may post special versions of software products for client evaluation. The term "central" is used in this application for conceptual visualization purposes. While the portal may appear central to a client, the portal may consist of multiple network-connected webservers that are geographically remote. Also, the software is "special" in the sense that the commercially available versions (or soon-to-be-available versions) are associated with an additional algorithm that requires a TCP/IP connection before the software may be executed. Once a connection is established by the client, the software can then be operated. While the client operates the software, a reporting software program reports the client's usage to a database that may be accessed by the software developer, as well as other developers. The database discloses the time and manner of usage in a way that allows the developers to evaluate product features and their desirability to clients.

In a first aspect, the present invention provides a method of information exchange, said method comprising the steps of: storing trial software products, from a plurality of vendors on a network-accessible portal in a computer network; receiving a request to download at least one trial software product from a customer; transmitting to the customer at least one trial software product in response to the request; controlling usage of trial software product by limiting software operation to a network-connected environment; and tracking usage of the software product downloaded by the customer.

Preferably, the tracking usage includes obtaining a market impression. Preferably, obtaining the market impression includes obtaining data from the customer. Preferably, obtaining the market impression includes obtaining data from a customer profile. Preferably, obtaining the market impression includes obtaining data from the downloaded trial software product.

Preferably, the storing of trial software products is executed in at least one computer-readable form of medium. Preferably, transmitting and receiving occurs on a TCP/IP network. Preferably, the storing trial software products, from a plurality of vendors on a network-accessible portal is accomplished in a server. Preferably, the storing trial software products, from a plurality of vendors on a network-accessible portal is accomplished in a server, and further connected to a TCP/TP network. Preferably, tracking usage further includes storing data related to the usage in a computer-readable form of medium.

Preferably, usage of the software product includes the amount of times the software was used. Preferably, usage of the software product includes the length of time the software was used. Preferably, usage of the software product includes the features used by the client. Preferably, usage of the software product includes the amount of times each feature was used. Preferably, usage of the software product includes the length of time each feature was used by the customer. Preferably, controlling the usage further includes controlling the number or type of software the customer may download.

Preferably, usage of the software product includes: (1) the amount of times the software was used, (2) the length of time the software was used, (3) the features used by the customer, (4) the amount of times each feature was used, and (5) the length of time each feature was used by the customer.

In a second aspect, the present invention provides a distributed data processing system for information exchange comprising at least one server computer connected over a network to at least one client computer, said system further comprising: a network interface connected to the network for receiving at least one request from at least one client for at least one trial software product for evaluation; at least one processor coupled to the interface and the server for processing the request; in which said processor retrieves from at least one trial software database in response to the request; and said server transmitting and monitoring requested trial software product, wherein the trial software product will not operate unless the trial software product is communicating with the server.

Preferably, the network interface is a TCP/IP interface. Preferably, the processor is in communication to the network. Preferably, an algorithm is executed within the at least one software trial product to prevent the software product from executing unless the client is connected to the at least one server. Preferably, the client connects to the at least one server through an TCP/IP connection.

Preferably, there is provided a computer program article of manufacture, comprising: a computer readable medium for providing a network-accessible location for downloading trial software products; code in said computer readable medium accessing at least one trial software product database; code in said computer readable medium for activating downloaded trial software products only when the trial software product is communicating with said computer readable medium; and code in said computer readable medium for monitoring use of said trial software product by a client.

Preferably, the code for monitoring use of trial software product is in communication with a database. Preferably, the database contains data pertaining to client profiles and/or preferences.

In a third aspect, the present invention provides a computer program product comprising computer program code, stored on a computer readable medium which, when executed on a computer, performs the method as described above.

Preferably, there is provided a business method for providing market impressions of client usage of trial software, comprising the steps of: providing a network-accessible location where at least one vendor stores at least one trial software product available for download by at least one client; receiving a request from at least one client at the location for a trial software product; transmitting a trial software product at the location in response to the request; restricting the operation of the trial software product, unless the trial software product is connected to the location.

Preferably, the operation of the trial software product is monitored. Preferably, data obtained from the monitoring of the trial software product is stored in a memory.

### BRIEF DESCRIPTION OF THE DRAWINGS:

The invention will now be described, by way of example only, with reference to the following drawings, in which:

**FIG. 1** illustrates an embodiment of a system incorporated on a computer network.

**FIG. 2** illustrates an embodiment of a process through which a client requests access to a server.

**FIG. 3** illustrates an embodiment where the server responds to a client request to deliver trial software.

**FIG. 4** illustrates an embodiment where the client executes the trial software.

**FIG. 5** illustrates an embodiment of the process involved in setting up the software delivery.

**FIG. 6** illustrates an embodiment of the process involved for a client using the trial software.

**FIG. 7** illustrates an embodiment of the interaction between the software products and the monitoring database.

### DETAILED DESCRIPTION OF THE PRESENT INVENTION

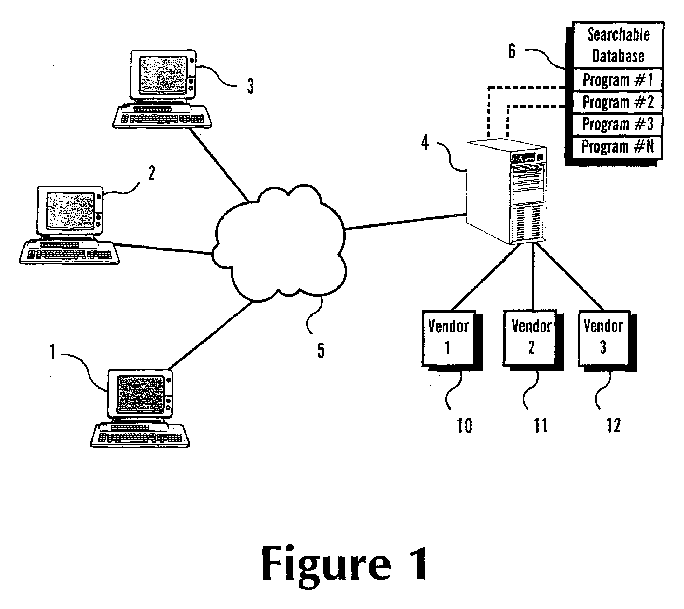

**FIG. 1** illustrates an embodiment of the system architecture where numerous clients **1, 2**, **3** are connected through a computer network **5**, to a central server (or "portal") **4**. Typically, the clients **1**, **2**, **3** are connected by a modem, or a similar device, that is associated with a computer. For this invention, the term "computer" relates to any processing machinery that has the ability to process and store data while being capable of interacting and obtaining instruction from a human being. The network **5** that is disclosed refers generally to a computer network that conforms to Transmission Control Protocol/Internet Protocol (TCP/IP). The actual number of clients **1**, **2**, **3** connected to the portal server **4** can be any number, and is limited only to the memory and networking capabilities of the network and server.

Housed within the server is a searchable database **6**. The database is a list of software program products (disclosed as "Program #1" through "Program #N" in **FIG. 1-3**) that various software developers, or vendors **10**, **11**, **12**, store in a computer-readable medium (not shown). The storage of the software may occur within the server, or may alternately be placed at a remote location. This location would then be configured to communicate with the portal server **4**, so that a searching algorithm within the database can query and retrieve requested software.

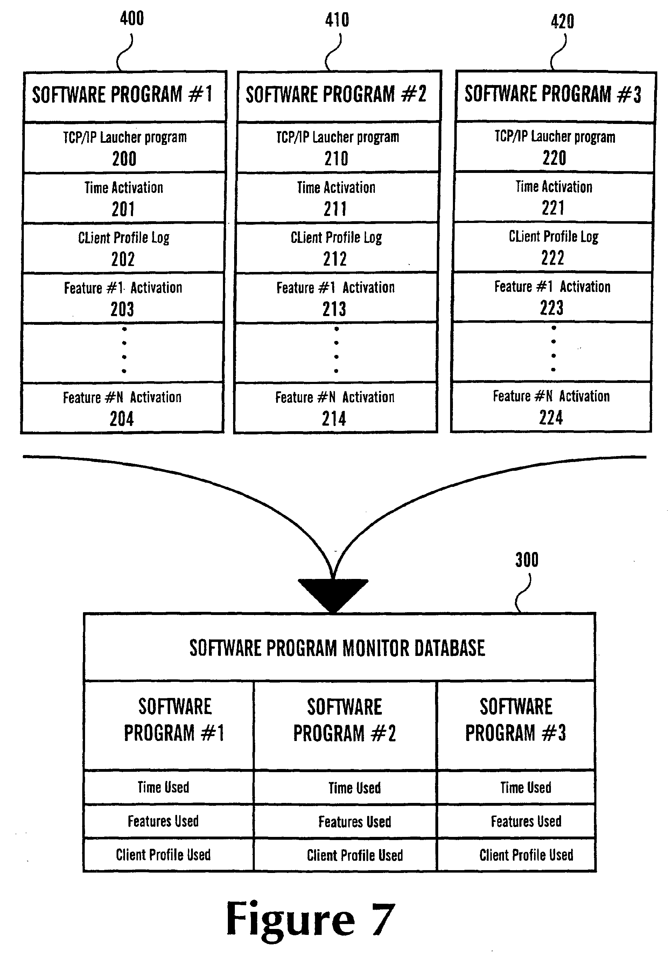

Multiple software providers, or "vendors" **10**, **11**, **12** are further associated with the server **4**. The term "vendor" is broadly construed to mean the software provider, along with the associated software program products, as well as software program product monitoring algorithm(s) that the vendor chooses to employ to obtain the desired market impression for the particular product. One embodiment of how vendors interact with the software and utilize client data can be seen in **FIG. 7**, which will be discussed below.

Software products that are to be made available for client download originate from each vendor **10**, **11**, **12**. Like the clients, the number of participating vendors can vary and is limited only to the memory and networking capabilities of the network and server. The software products are loaded into the searchable database **6** from each vendor. The actual arrangement of software products on the server is left up to the server administrator. The software products may be classified according to type of software (game, utility, word processing, etc.), software provider, or any other system that would help clients access a desired software product. The software products may be manually loaded into the database, or may be transmitted to the server from the vendor's remote location. Once the software is registered with the searchable database **6**, the software becomes available for download by the client.

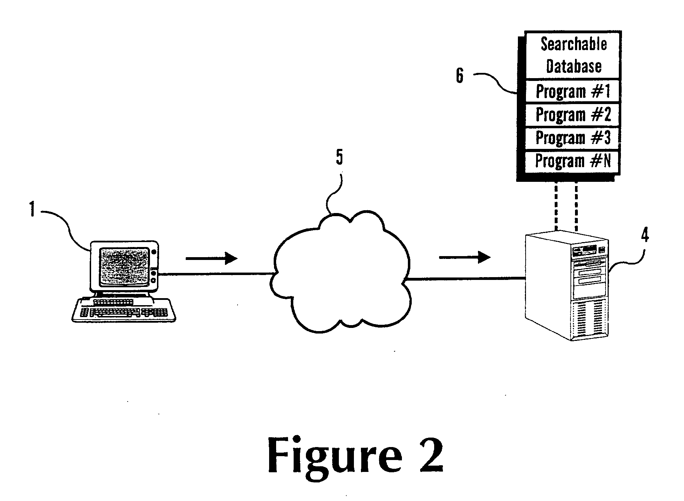

In **FIG. 2,** a client **1** wishes to obtain a software product for evaluation from the server **4.** Typically, the client would type in the URL or IP address of the server to establish a connection. Once connected, the client would then be ready to access trial software available on the web site. It is understood that a variety of security challenges (for example, passwords) may be made to each client wishing to access software. In the preferred embodiment, the client would pre-register at the site to establish a client profile. In the profile, the client would enter information including sex, age, place of domicile, types of software that the client typically uses, etc. This profile would then be stored for viewing by the vendor(s).

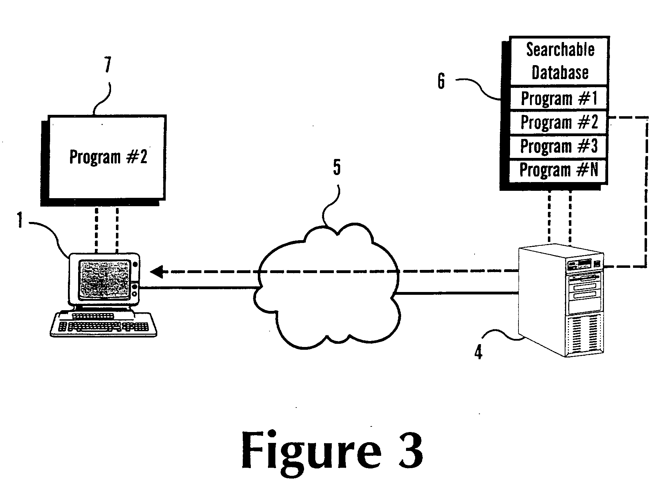

**FIG. 3** shows one embodiment where the client **1** searched the database for a particular software product (shown in **FIG. 3** as "Program #2"). Once the desired software product is located, the client **1** downloads the software product over the network **5**, where it is then stored **7** in the client's **1** local computer-readable storage medium. It is understood that clients may seek out software through a variety of methods on the web site. For example, the categories of software may be listed on the web page under their respective classification (for example, "games", "utilities", "graphics", etc.). From these listings, the client **1** may alternately browse through the selections by employing HTTP links to each software product category. Once the software is located, the client **1** may then proceed to download.

Once the software product **7** is installed into the client's computer, the client **1** may then begin the process of using and evaluating the software **7**. When the program **7** is activated, the software immediately requests an IP connection to the server **4**. The algorithm that initiates the connection may be coded into the software product itself, or it may accompany the software as an "execute first" command. It is important to point out that in the embodiments shown, the software will not be capable of being open without having a connection established to the server **4**.

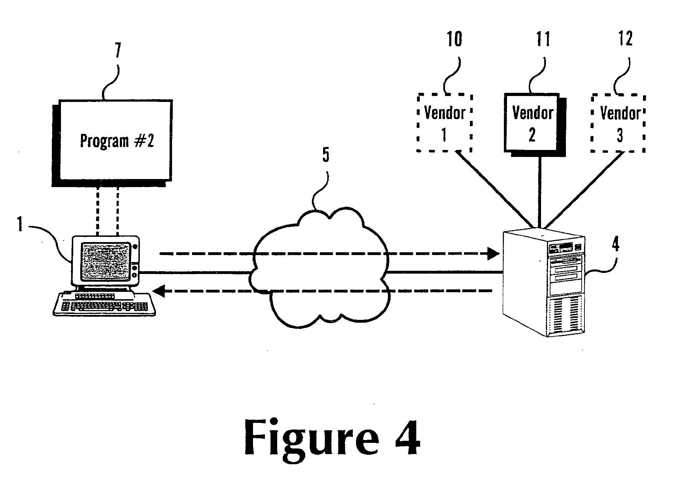

Once connection is established, as shown in FIG. **4**, the user may commence using the software. Typically, the client **1** will re-register with the site, either manually, or automatically (that is, via "cookies") so that the server may identify the client using the software **7**. In **FIG. 4**, vendor **11** is disclosed as being the owner of the software product **7**, and is now able to collect data on client **1** while the client uses the software **7**. Vendor **11** is further disclosed as being active, while the other vendors **10**, **12** are shut out. This embodiment allows vendors to collect market impressions on client usage privately, without breaching market impression data to rival vendors **10**, **12**. However, the system may also be arranged so that all of the vendors may view client software product usage. Such an embodiment would be useful for groups of vendors seeking to determine which products (regardless of who owns them) are being used by clients, and to what extent. The system may be configured so that other vendors may be able to see summarized statistics, or less detailed information.

One way which vendors can track client software usage is shown in **FIG. 7**. The various software programs associated with the database **6** are disclosed as **400**, **410**, **420**. An example of how vendors configure their software products would be to encode, or otherwise associate a series of algorithms with the product. For example, each software product contains a TCP/IP launcher program **200**, **210**, **220**, which is configured to execute an algorithm that connects the client automatically to the central server **4**. The launcher program may further be encoded with a termination subroutine (not shown) which terminates the software product if a connection is not established. Also disclosed is a timer activation algorithm **201**, **211**, **221** that triggers a start time when the program is active. The timer algorithm then continues to run so long as the software is active. Once the program is terminated, the time that elapsed during the client's usage is calculated and stored or transmitted to a software program monitor database **300**. The usage time can then be utilized by the vendor(s) to see how long clients use a particular product, or otherwise determine popularity of the product.

Further disclosed is a client profile log **202**, **212**, **222**. The log associates the types of software used with the client log that is stored upon the initial registration of the client (discussed above). Thus, vendors can view extraneous market impressions that clients may not effectively communicate in their registration. For example, a vendor may compare client profiles to the types of software evaluated by those clients. The vendor may then process the data to extrapolate market data, like discovering that clients interested in "cars and mechanics" may fit the profile of clients most likely to download and evaluate graphic and drafting software products. The client-software associations may be configured in any way the vendor chooses to determine the appropriate market data.

Finally, vendors may include feature activation algorithms **203-204**, **213-214**, **223-224** to determine which features clients choose to utilize. If a client activates a particular feature, for example, the associated feature algorithm sends a mark to the database **300** to tabulate that the feature was used by the client. The feature activation algorithms may further be incorporated with the time activation algorithms **201**, **211**, **221** to determine the time periods in which those features were activated.

All of the collected data is then stored in database 300 for market use by the vendor. Each vendor may then configure the database to extract salient market data from client usage. In the figure shown for example, a vendor may record and process the time the software was used, the features of the software that were used, and the type of client (via client profile) that was using the software **FIG. 7**. From this database, the vendor can then process the data to determine client market evaluations for future software programs.

It is understood that the actual means employed by the vendors and/or server administrator to track client usage, and to determine what data is collected, and how, may vary. The system provides enough flexibility so that each vendor or groups of vendors may collect and process data to meet their own marketing perspectives.

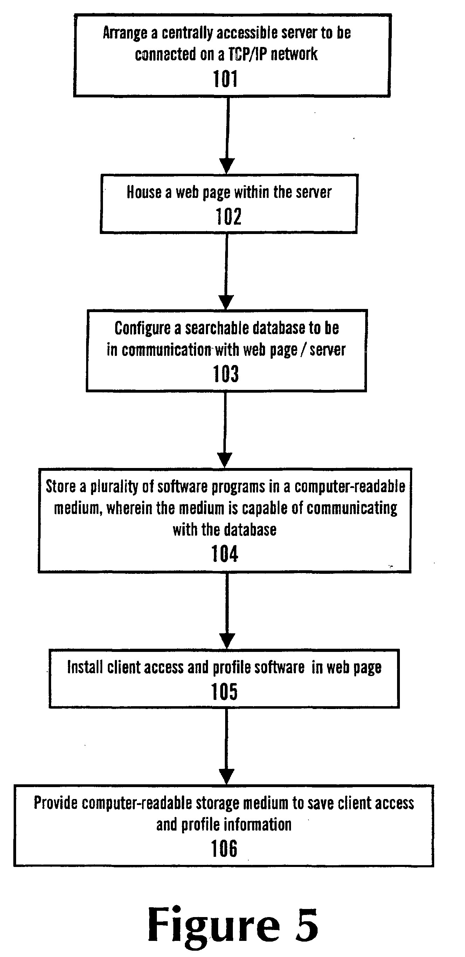

**FIG. 5** discloses a flowchart describing the process through which vendors make software products available to clients for downloading and evaluation. First, a network accessible server is connected to a TCP/IP network **101**. The server will thus be available as the "central point" of client interaction and requests for software evaluation. Next, a web site is hosted within the server **102**. The web site can then function as the central processing space through which client interactions take place. In **103**, a searchable database is constructed to be accessible through the web page and server. The database is preferably accessible through a TCP/IP link, and is further accessed directly or indirectly, through an independent processing apparatus.

Once the server and database are configured, the vendors then store a plurality of various software programs in a computer-readable medium, wherein the medium is capable of communicating with the database **104** (in the preferred embodiment, the medium is a hard drive). The database connects with the storage device through a TCP/IP connection; the storage device may be located in the same physical space as the server, or may be located at a remote location. Once the database is associated with the stored software products, client access and profile software is associated with the web page **105**. The client access and profile software acts as a gateway for clients trying to access the web page. User typically register themselves by manually inserting personal information which the vendors will use to evaluate the market impact of their software products. Clients can also supply alternate "user names" and passwords to access the server. Once entered, the information is subsequently stored in a computer-readable storage medium **106**. This medium may be the same medium as disclosed in **104**, or may alternately be provided in a separate location. The stored client information will subsequently be in communication with the rest of the system to allow vendors to determine the length and manner of usage of particular software products by specific clients. The software evaluation portal is ready for use by clients, once the process in **FIG. 5** is carried out.

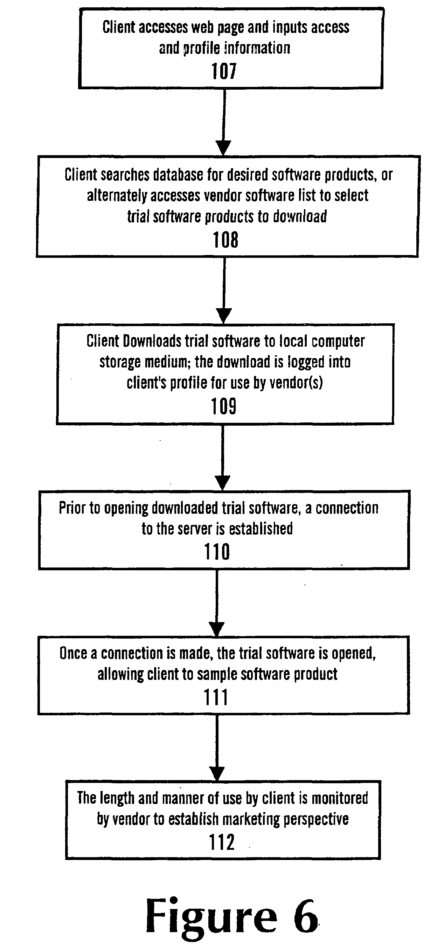

**FIG. 6** shows how clients can evaluate the software within the software evaluation portal. When a client wished to access the software, the client first must access the server through the computer network. Preferably, the connection is made through a TCP/IP connection. By typing in the URL or IP address of the web site, the client can connect to the server, and input the client access and profile information **107**. The information inputted and stored corresponds to the client access and profile software (and associated storage medium) disclosed in **105** and **106**.

Once the client is past **107**, the client may then actively search and obtain the desired software to download. The client accomplishes this through searching through the database, or alternately browsing through software categories and lists provided by the vendors **108**. Once the desired software is chosen for client evaluation, the client proceeds to choose the software (through HTTP or similar means), and downloads the software to the client's local storage **109**. When the software is downloaded, the software product monitoring database logs the download for that client **109**. The vendor can see at that point that a particular software product was downloaded by the client. A running counter may be used by the vendor to determine the number of times software was downloaded.

Once the client has the software loaded into the local drive, the client can then begin executing the software. Once an "open" command is executed, the software employs a TCP/IP connection algorithm to check connection to the server **110**. If the client is off-line, the TCP/IP connection algorithm automatically attempt to establish a connection back to the server. If no connection is established, the software product automatically terminates. However, if the connection is established, the trial software is opened and is ready for evaluation by the client **111**. The length of time and actions of the client are then monitored and recorded (as discussed above), and the vendors may then establish marketing perspectives from the data **112**.

It is understood that the nature of the invention provides for numerous variations that can be implemented without deviating from the scope of this invention. For example, the types of information that vendors wish to collect and process is reserved for the vendors themselves. They may choose to track hobbies, domicile, age groups, sex, software preferences, or any combination of these, or any other variables. Furthermore, the central server administrator may allow vendors to track only their own software, or may alternately group vendors according to software type, allowing each vendor to view the results of market impressions taken from competitor's products. The implementation of the various algorithms disclosed herein may also be physically embodied in a variety of mediums, and may be "bundled" as part of the trial software product; alternately the algorithms may physically exist in separate locations and communicate to each other through the network.

## Claims

1. A method of information exchange, said method comprising the steps of:
storing trial software products, from a plurality of vendors on a network-accessible portal in a computer network;
receiving a request to download at least one trial software product from a customer;
transmitting to the customer at least one trial software product in response to the request;
controlling usage of trial software product by limiting software operation to a network-connected environment; and
tracking usage of the software product downloaded by the customer.

2. A method as claimed in claim 1, in which the tracking usage includes obtaining a market impression.

3. A method as claimed in claim 2, in which obtaining the market impression includes obtaining data from the customer.

4. A method as claimed in claim 2, in which obtaining the market impression includes obtaining data from a customer profile.

5. A method as claimed in claim 2, wherein obtaining the market impression includes obtaining data from the downloaded trial software product.

6. A method as claimed in any preceding claim, in which controlling the usage further includes controlling the number or type of software the client may download.

7. A method as claimed in any preceding claim, in which usage of the software product includes: (1) the amount of times the software was used, (2) the length of time the software was used, (3) the features used by the customer, (4) the amount of times each feature was used, and (5) the length of time each feature was used by the client.

8. A distributed data processing system for information exchange comprising at least one server computer connected over a network to at least one client computer, said system further comprising:
a network interface connected to the network for receiving at least one request from at least one client for at least one trial software product for evaluation;
at least one processor coupled to the interface and the server for processing the request;
in which said processor retrieves from at least one trial software database in response to the request; and
said server transmitting and monitoring requested trial software product, wherein the trial software product will not operate unless the trial software product is communicating with the server.

9. The system as claimed in claim 8, wherein an algorithm is executed within the at least one software trial product to prevent the software product from executing unless the client is connected to the at least one server.

10. A computer program product comprising computer program code, stored on a computer readable medium which, when executed on a computer, performs the method of any of claims 1 to 7.
